# EUROPÄISCHE PATENTSCHRIFT

(11) **EP 1 568 274 B1**
(45) Veröffentlichungstag und Bekanntmachung des Hinweises auf die Patenterteilung: **24.10.2007**
(21) Anmeldenummer: 05101099.9
(22) Anmeldetag: 15.02.2005
(51) Int. Cl.: A01M 7/00

(54) **Gestängeanordnung**
Linkage arrangement
Mécanisme de liaison

(30) Priorität: 25.02.2004 US 786689
(43) Veröffentlichungstag der Anmeldung: 31.08.2005
(73) Patentinhaber: DEERE & COMPANY, Moline, Illinois 61265-8098 (US)
(72) Erfinder: Wubben, Thomas Mark, Ankeney, IA 50021 (US); Klemme, Kent Alvin, Ankeny, IA 50021 (US); Gambleton, Vernon Kent, West Des Moines, IA 50265 (US); Carlson, Brandon Cy, Ankeny, IA 50021 (US); Brett, William Anthony, Ankeny, IA 50021 (US); Miller, Matthew T., Ankeny, IA 50021 (US)
(74) Vertreter: Holst, Sönke

(56) Entgegenhaltungen:
- US-A- 4 344 572
- US-A- 5 000 385
- US-B1- 6 293 475

## Beschreibung

Die Erfindung betrifft eine Gestängeanordnung, mit einem Tragrahmen, einem Gestängeabschnitt, welcher zum Bewegen zwischen einer Betriebsstellung und einer Rückweichstellung schwenkbar mit dem Tragrahmen verbunden ist, einem hydraulischen Rückweichzylinder, welcher einen ersten Zustand, in der er den Gestängeabschnitt in seiner Betriebsstellung hält, und einen Rückweichzustand aufweist, wenn der Gestängeabschnitt auf ein Hindernis trifft, einer mit dem Rückweichzylinder verbundenen hydraulischen Ventilanordnung und einem mit dem Rückweichzylinder verbundenen Hydraulikspeicher, wobei die Ventilanordnung und der Hydraulikspeicher eine abgestufte Drucksteuerung des Rückweichzylinders bereitstellen, derart, dass Druck erzeugt wird, um Energie zu absorbieren, sobald sich der Gestängeabschnitt aus der Betriebsstellung herausbewegt, wobei der abgestufte Druck zunimmt, um die Bewegungsenergie des Gestängeabschnitts zu absorbieren, sobald der Gestängeabschnitt sich der Rückweichstellung annähert.

Das Spritzengestänge einer modernen landwirtschaftlichen Spritzmaschine weist normalerweise eine Konstruktion mit faltbaren Gestängeabschnitten auf, die es ermöglichen, das Spritzengestänge auf eine Arbeitsbreite von 27 bis 36 m (90 bis 120 ft) oder mehr auszuklappen. Eine Bedienperson kann Spritzmittel bei Geschwindigkeiten von 16 bis 32 km/h (10 bis 20 mph) ausbringen wobei es ist nicht ungewöhnlich ist, dass das Spritzengestänge beim Spritzenbetrieb mit auf dem Feld herausragenden Hindernissen kollidiert. Dabei kann die Schwingenkonstruktion katastrophale Schäden erleiden, die dazu führen, dass die Spritzmaschine unbrauchbar wird, wenn das Spritzengestänge mit einem unbeweglichen Objekt, wie z. B. einem Telefonmast kollidiert. Der Schaden verursacht kosten- und zeitintensive Reparaturen der Gestängeabschnitte. Um derartige Kollisionsschäden zu reduzieren oder zu vermeiden wurden verschiedene Faltkonstruktionen für Gestänge entwickelt, welche bei einer Kollision ein rückwärtiges Wegklappen äußerer Gestängeabschnitte oder des Gestängeabschnitts der am Tragrahmen des Spritzengestänges angelenkt ist, erlauben. Das Maß der Wegklappbewegung muss entsprechend angepasst sein, um zu ermöglichen, dass mehrere Meter (Fuß) der Gestängekonstruktion am Hindernis vorbeigeführt werden können. Wenn die Konstruktion einen hydraulischen Rückweichzylinder aufweist, muss die Kollisionsenergie am Gestänge ausreichend hydraulisch absorbiert werden, bevor der gesamte Hubweg des Zylinders verbraucht ist. Einige derzeit erhältliche hydraulische Systeme enthalten einen komplexen und teuren Zylinder mit eingebauten Dämpfungsdrosseln. Das hydraulische System kann sehr kompliziert und teuer sein. Das Auffinden eines wirtschaftlichen Rückweichsystems, welches in der Lage ist ein ausreichendes Maß an Kollisionsenergie aufzunehmen, um die gesamte Belastung des Gestänges auf einen zerstörungsfreien Level zu begrenzen, und gleichzeitig eine übermäßige Schwungkraft und ein Nachschwingen des Gestänges zu vermeiden, stellt ein andauerndes Problem dar.

Die US 6,293,475 offenbart ein Rückweichsystem für ein Spritzengestänge, wobei ein Faltzylinder in einem Ausfahrmodus, einem Einfahrmodus und, als Rückweichzylinder fungierend, in einem Normalmodus hydraulisch betreibbar ist. Im Normalmodus sorgt ein mit einer Ventilanordnung verbundener Hydraulikspeicher für eine Dämpfungsfunktion, anhand der das Rückweichen des Gestänges bei Aufprallen eines Störobjekts über den Hydraulikspeicher abgedämpft wird. Nachteilig ist, dass die Dämpfungsrate bzw. der Druck im System mit zunehmendem Rückweichweg des Gestänges proportional zunimmt, was zu hohen Übertragungskräften am Gestänge und harten Dämpfungscharakteristiken führt.

Die der Erfindung zugrunde liegende Aufgabe wird darin gesehen, ein Rückweichsystem der eingangs genannten Art anzugeben, durch welches einige oder alle der vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Gestängeanordnung der eingangs genannten Art derart ausgebildet, dass während wenigstens einer der Stufen die Ventilanordnung die Absorption der Energie des Gestängeabschnitts steuert und während einer anderen Stufe die Absorption der Energie des Gestängeabschnitts durch den Hydraulikspeicher erfolgt.

Die inneren Gestängeabschnitte sind mittels Scharnierverbindungen an einen Tragrahmen des Gestänges angelenkt. Durch die Scharnierverbindungen und mittels der Steuerung durch einen hydraulischen Faltzylinder können die Gestängeabschnitte üblicherweise um 90° von einer vorwärtsgerichteten Transportstellung in eine ausgebreitete Spritzbetriebsstellung verschwenkt werden. In einem vorliegenden Ausführungsbeispiel ist der Faltzylinder, welcher sich bei vielen vorherigen Konstruktionen zwischen dem Tragrahmen und dem inneren Gestängeabschnitt erstreckt, an einem Wipphebel angeschlossen, welcher schwenkbar mit dem Tragrahmen des Spritzengestänges verbunden ist. Der Wipphebel ist an einen hydraulischen Rückweichzylinder angeschlossen, welcher üblicherweise in eine vollständig ausgefahrene Hubstellung vorgespannt und mit einem Hydraulikspeicher verbunden ist. Wenn ein Gestängeabschnitt mit einem Objekt kollidiert, werden die Kollisionskräfte über den Faltzylinder und Wipphebel in den Rückweichzylinder übertragen. Wenn die Kräfte groß genug sind, dann wird der Rückweichzylinder beginnen einzufahren, so dass der Druck im Rückweichzylinder ansteigt und einer von dem Hydraulikspeicher abhängigen Druckkurve folgt. Sobald der Rückweichzylinder zusammenfährt, um eine Schwenkbewegung des Gestängeabschnitts zu ermöglichen baut sich der Druck im Rückweichzylinder in drei Stufen auf. Zuerst baut sich ein Druck entlang einer Druckkurve des Hydraulikspeichers auf, bis ein Druckbegrenzungsventil im hydraulischen System aktiviert wird, um die zweite Stufe einzuleiten, in der Öl über das Druckbegrenzungsventil abgelassen wird. Danach baut sich erneut ein Druck entlang derselben Druckkurve des Hydraulikspeichers auf. Durch diesen stufenweisen Druckaufbau wird die Energie, die durch die Kollision in das Spritzengestänge gebracht wird, effektiv hydraulisch absorbiert, bevor der volle Hubweg des Rückweichzylinders verbraucht ist. Dieser stufenweise Druckaufbau verhindert außerdem eine die Festigkeit der gesamten Konstruktion übersteigende Bewegungsenergie des Gestänges und Belastungszunahme.

Das System ist vollständig hydraulisch und eliminiert die Notwendigkeit mechanischer Verschleißflächen oder Einstellungen. Das hydraulische Ventil steuert die Verzögerung des Rückweichzylinders am Ende des Hubwegs. Im Vergleich zu Systemen, welche einen Zylinder mit integrierten Dämpfungsdrosseln aufweisen, ist das vorliegende System preiswerter und weniger komplex als die meisten anderen kommerziell erhältlichen hydraulischen Rückweichsysteme und ermöglicht eine weiche, federähnliche Absorption der Energie eines sich bewegenden Gestänges wenn die Widerstandskraft des Rückweichzylinders sich beim zusammenfahren des Rückweichzylinders erhöht. Der Hydraulikspeicher liefert zusätzlich einen Dämpfungseffekt für das gesamte Gestänge bei normalen Betriebsbedingungen.

Anhand der Zeichnungen, die ein Ausführungsbeispiel der Erfindung zeigen, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Draufsicht eines Bereichs eines landwirtschaftlichen Spritzengestänges, bei dem ein linker Gestängeabschnitt mit einem Tragrahmen verbunden ist und welches sich in einer ausgefahrenen Betriebsstellung befindet,
- Fig. 2: eine Ansicht ähnlich zu Figur 1, wobei der linke Gestängeabschnitt in einer Rückweichstellung dargestellt ist,
- Fig. 3: eine vergrößerte Draufsicht des Tragrahmens aus Figur 1 mit dem linken und dem rechten Gestängeabschnitt in einer vollständig ausgefahrenen Betriebsstellung,
- Fig. 4: eine vergrößerte Draufsicht des Tragrahmens aus Figur 2 mit dem linken Gestängeabschnitt in einer Rückweichstellung und dem rechten Gestängeabschnitt in einer vollständig ausgefahrenen Betriebsstellung,
- Fig. 5: eine Ansicht ähnlich zu Figur 4, wobei der rechte Gestängeabschnitt in einer Rückweichstellung und der linke Gestängeabschnitt in einer vollständig ausgefahrenen Betriebsstellung dargestellt ist,
- Fig. 6: eine schematische Ansicht des im Rückweichsystem verwendeten hydraulischen Systems und
- Fig. 7: eine Graphik mit einem Beispiel einer Druckkurve eines Rückweichzylinders.

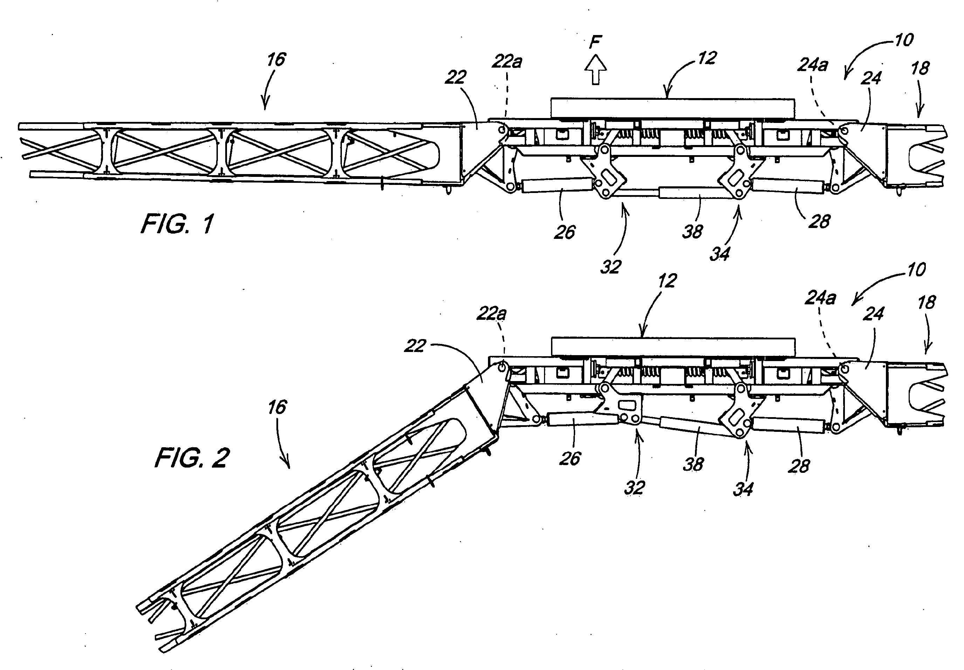

Die Figuren 1 und 2 zeigen einen Teil eines Gerätes 10 mit einem gedämpften Tragrahmen 12, welcher von einem zur Vorwärtsbewegung F über ein Feld ausgebildeten Fahrzeugrahmen (nicht gezeigt), wie dem einer selbstfahrenden Maschine oder eines gezogenen Anhängers, getragen wird. Linke und rechte innere Falt-Gestängeabschnitte 16, 18 sind über eine Scharnierkonstruktion 22 bzw. 24 auf gegenüberliegenden Seiten des Tragrahmens 12, zum Verschwenken mittels Faltzylinder 26 und 28 um eine aufrechte Achse 22a und 24a zwischen einer nach außen gerichteten Betriebsstellung (Figur 1) und einer nach vorn zusammengefalteten Transportstellung (nicht gezeigt), mit dem Tragrahmen 12 verbunden. Weitere, äußere Gestängeabschnitte können an die Enden der Gestängeabschnitte 16, 18 angeschlossen werden, um eine Arbeitsbreite von bis zu 36 m (120 ft) oder mehr zu erhalten.

Die Faltzylinder 26, 28 sind mit Wipphebel 32, 34 verbunden. Die Wipphebel 32, 34 sind schwenkbar mit dem Tragrahmen 12 und mit den Enden der Faltzylinder 26, 28 verbunden. Zwischen den Wipphebeln 32, 34 ist ein Rückweichzylinder 38 angeordnet, um die Gestängeabschnitte 16, 18 bei normalem Betrieb in der Betriebsstellung (Figur 1) zu halten, wobei einem oder beiden Gestängeabschnitten 16, 18 ermöglicht wird, in eine Rückweichstellung zu verschwenken, wenn die Gestängeabschnitte 16, 18 auf ein Hindernis treffen.

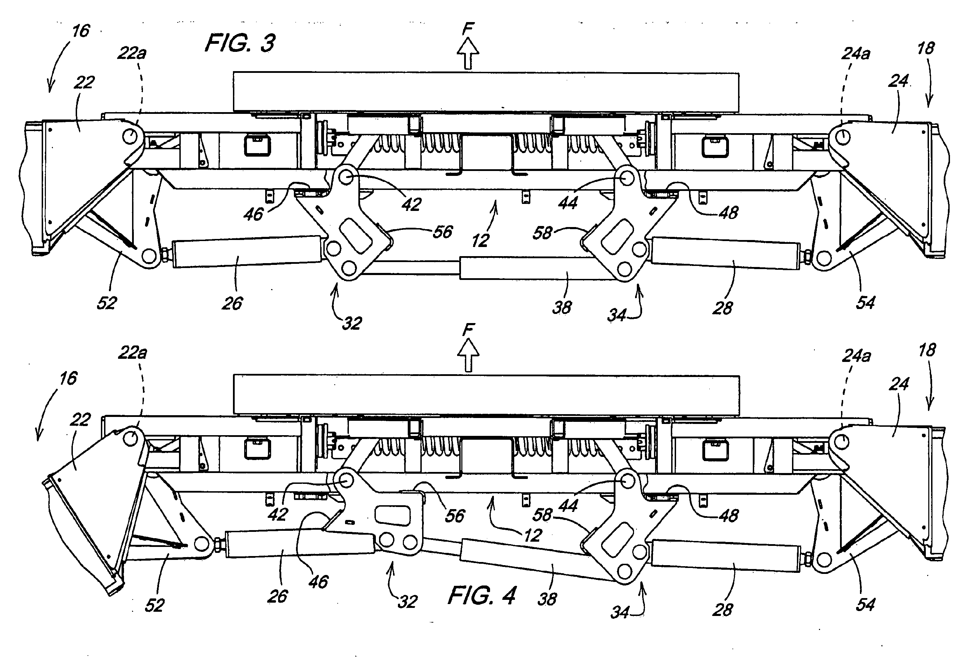

Wie am besten in den Figuren 3 bis 6 zu erkennen ist, sind die Wipphebel 32, 34 im Wesentlichen spiegelbildlich zueinander angeordnet und umfassen Schwenkachsen 42, 44 und äußere Anschläge 46, 48, die radial zu den Schwenkachsen 42, 44 versetzt angeordnet sind und am Tragrahmen 12 anliegen, wenn der Rückweichzylinder 38 sich in einer vollständig ausgefahrenen Stellung befindet (Figur 3). Der Rückweichzylinder 38 agiert während des Betriebs des Gerätes 10 als starres Verbindungsglied, außer wenn ein oder beide Gestänge auf ein Hindernis treffen. Die kolbenseitigen Enden der Faltzylinder 26, 28 sind rückwärtig der Schwenkachsen 42, 44 schwenkbar mit den Wipphebeln 32, 34 verbunden. Die stangenseitigen Enden der Faltzylinder 26, 28 sind schwenkbar mit Scharnierarmen 52, 54 verbunden, welche sich radial nach außen von den Scharnierachsen 22a, 24a erstrecken. Bei ausgefahrenem Rückweichzylinder 38 und eingefahrenen Faltzylindern 26, 28 (Figur 1) liegen die Anschläge 46, 48 am Tragrahmen 12 an und die Gestängeabschnitte 16, 18 erstrecken sich seitwärts vom Tragrahmen 12. Die maximale Ausfahrstellung des Rückweichzylinders 38, wenn die Anschläge 46, 48 an dem Tragrahmen 12 anliegen, liegt geringfügig unterhalb des vollständigen Hubweges des Rückweichzylinders 38, um einen konstanten Druck auf das Gestänge zu gewährleisten und Lockerheit im System zu vermeiden. Um jeden der Gestängeabschnitte 16, 18 um in etwa 90 Grad in eine vorwärtsgerichtete Transport- oder Lagerstellung zu schwenken, werden die Faltzylinder 26, 28 durch konventionelle hydraulische Faltkonstruktionen am Gerät 10 ausgefahren.

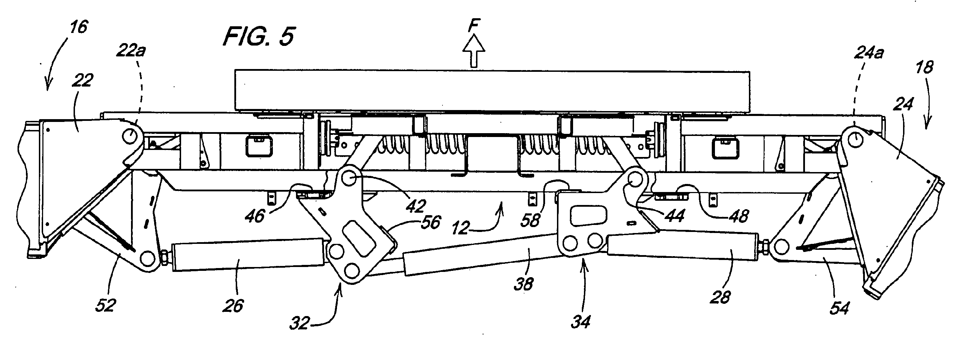

Die Wipphebel 32, 34 weisen auch innere Anschläge 56, 58 auf um ein Verschwenken zu begrenzen, wenn ein Hindernis von dem Gestänge getroffen wird. Zum Beispiel, wenn der linke Gestängeabschnitt 16 auf ein Hindernis trifft und der Rückweichzylinder 38 aus seiner vollständig ausgefahrenen Stellung zusammenfährt, kann der linke Gestängeabschnitt 16 rückwärts schwenken (Figuren 2 und 4) und den Wipphebel 32 entgegengesetzt verschwenken, bis der Anschlag 56 am Tragrahmen 12 zur Anlage kommt. Figur 5 zeigt den Wipphebel 34 in entgegengesetzt verschwenkter Stellung, mit an dem Tragrahmen 12 anliegendem Anschlag 58, wenn der Gestängeabschnitt 18 auf ein Hindernis trifft und in eine vollständige Rückweichstellung bewegt wird. Wie in den Figuren 1 bis 5 dargestellt kann jeder einzelne Gestängeabschnitt 16, 18 in einer Rückweichsituation um bis zu 33 Grad rückwärts verschwenkt werden, wodurch bei einem Gestänge, welches ausgefaltet oder konfiguriert wurde, um auf einer Arbeitsbreite von 21,3 m (70 ft) zu spritzen, nahezu 1,54 m (5 ft) an Rückweichlänge gewonnen werden. Des Weiteren können beide Gestängeabschnitte 16, 18 gleichzeitig in Rückweichstellungen bewegt werden, wobei die Rückweichstellungen dann einen geringeren Winkel aufweisen als bei vollständiger Rückweichstellung.

Ein Hydraulikkreis 60 ist mit dem Rückweichzylinder 38 verbunden, um den Rückweichzylinder 38 normalerweise in Richtung einer vollständig ausgefahrenen Stellung mit Druck zu beaufschlagen, wie in den Figuren 1, 3 und 6 dargestellt ist. Wenn eine ausreichend hohe Kraft auf den Rückweichzylinder 38 einwirkt, ermöglicht der Hydraulikkreis 60, dass der Rückweichzylinder 38 zusammenfährt, so dass der auf ein Hindernis auftreffende Gestängeabschnitt oder die Gestängeabschnitte 16, 18 sich rückwärts in die Rückweichstellung bewegen können. Der Hydraulikkreis 60 bildet einen gesteuerten Druckaufbau, durch welchen die durch das Gestänge eingebrachte Energie hydraulisch absorbierbar ist, bevor der gesamte Hubweg des Rückweichzylinders 38 verbraucht ist. Die Druckkurve wird durch den Hydraulikkreis 60 gesteuert, um eine Zunahme der Bewegungsenergie des Gestänges zu verhindern und um Belastungen des Gestänges zu begrenzen, so dass das die gesamte Festigkeit des Gestänges nicht überschritten wird.

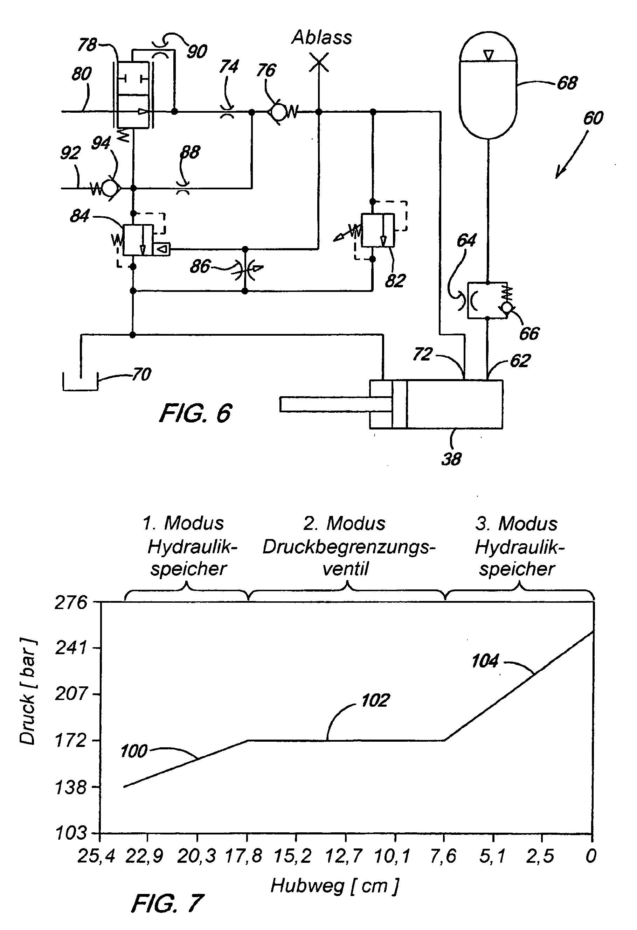

Wie in Figur 6 gezeigt ist, ist das Kolbenseitenende des Rückweichzylinders 38 über einen hinteren oder ersten Anschluss 62 mit einer Drossel oder Blende 64 und mit einem Rückschlagventil 66 verbunden. Die Blende 64 und das Rückschlagventil 66 sind parallel geschaltet und zwischen dem Kolbenende des Rückweichzylinders 38 und einem auf ca. 96.5 bar (1400 psi) aufgeladenen Hydraulikspeicher 68 angeordnet. Das Stangenseitenende des Rückweichzylinders 38 ist mit einem Hydrauliktank 70 verbunden. Ein zwischengelegener oder zweiter Anschluss 72, vor dem Anschluss 62 in Nähe des Kolbenseitenendes in Richtung des Hubs des Rückweichzylinders 38 versetzt angeordnet, ist über eine Blende 74 und einem Rückschlagventil 76 mit einem Druckausgleichsventil 78 verbunden, welches mit einer Hydraulikquelle oder Pumpendruckleitung am Fahrzeug 10 verbunden ist. Zwischen dem Anschluss 72 und dem Hydrauliktank 70 ist ein Differenzdruck-Tellerventil oder ein Druckbegrenzungsventil 82 angeordnet. Ein Entlastungs-Steuerventil 84 mit integriertem Ablass ist steuerbar mit dem Druckausgleichsventil 78 verbunden. Zwischen dem Anschluss 72 und dem Hydrauliktank 70 ist ein Nadelventil 86 angeordnet, um den Systemdruck zu Servicezwecken abzulassen. Eine mit einer Blende 88 versehene Leitung verbindet den Eingang des Ventils 84 und einen Druck erfassenden Eingang des Ventils 78 mit einer Verbindungsstelle zwischen der Blende 74 und dem Rückschlagventil 76. Der gegenüberliegende Druck erfassende Eingang des Ventils 78 ist über eine Blende 90 mit einer Ausgangsleitung des Ventils 78 verbunden. Eine Druckerfassungsleitung 92 der Hydraulikpumpe ist über ein Rückschlagventil 94 mit dem Ventil 84 verbunden.

Nachdem ein Systemdruckabfall eingetreten ist, z. B. durch ein Rückweichereignis, Leckagen im System oder Druckablass aus Service- oder Lagerungszwecken, wird druckbeaufschlagte hydraulische Flüssigkeit von der Leitung 80 durch das Druckausgleichventil 78 geleitet. Das Ventil 84 erfasst den Druck des hydraulischen Systems und ermöglicht, dass das System durch die Pumpe und über das Ventil 78 mit Druck beaufschlagt wird, bis der vorbestimmte Druck am Ventil 78 erreicht wird.

Bei Betrieb, in einem ersten oder Feldbetriebsmodus, neigen wechselnde, durch dynamische Bewegungseffekte am Gestänge hervorgerufene Belastungen dazu, den Rückweichzylinder 38 zusammenzudrücken. Derartige Kompressionen drängen augenblicklich hydraulische Flüssigkeit durch den Anschluss 62 über das Rückschlagventil 66 in den Hydraulikspeicher 68. Der Druck im Rückweichzylinder 38 baut sich entsprechend dem in Figur 7 dargestellten Abschnitt 100 auf. Über die Blende 64 wird ein Rückfluss in den Rückweichzylinder 38 bereitgestellt, um die Geschwindigkeit, mit der sich der Gestängeabschnitt 16, 18 zurückbewegt, zu steuern. Figur 7 repräsentiert lediglich die Druckkurve des Rückweichzylinders für ein mögliches Beispiel. Es ist selbstverständlich, dass in Abhängigkeit von den physikalischen Eigenschaften des Gestänges und der gewünschten Antwort zahlreiche andere Druckkurven realisierbar sind.

In einem zweiten oder Anfangs-Rückweichmodus, wenn das Gestänge beginnt, sich in eine Rückweichstellung zu bewegen, baut sich der Druck im Rückweichzylinder gegen einen durch das Ventil 82 bestimmten vorgewählten Druck auf. Wenn der vorgewählte Druck erreicht wird, welcher in dem gezeigten Beispiel zwischen 103,4 und 137,9 bar (1500 und 2000 psi) liegt, öffnet das Ventil 82 und hydraulische Flüssigkeit beginnt durch den Anschluss 72 in den Hydrauliktank zu fließen. Durch das Ventil 82 wird ein im Wesentlichen gleich bleibender Druck gehalten, wie in dem Abschnitt 102 der Druckkurve aus Figur 7 hervorgeht, bis der Kolben des Rückweichzylinders 38 den Anschluss 72 passiert.

In einem dritten oder End-Rückweichmodus, welcher eintritt, wenn der Kolben des Rückweichzylinders 38 den Hydraulikfluss durch den Anschluss 72 unterbricht, wird hydraulische Flüssigkeit durch den Anschluss 62 in den Hydraulikspeicher 68 gedrängt. Der Druck im Rückweichzylinder 38 nimmt zu, wie in Figur 7 im Abschnitt 104 der Druckkurve dargestellt ist, bis der Gestängeabschnitt 16, 18 die maximale Rückweichstellung einnimmt (Figur 2). In einer alternativen Ausführungsform kann das Druckbegrenzungsventil 82 zusammen mit einem in der Leitung vorgesehenen positionsabhängigen Schließventil mit dem Anschluss 62 verbunden sein, so dass der Hydraulikkreis des Druckbegrenzungsventils 82 geschlossen wird, wenn die letzten Zentimeter des Hubweges des Rückweichzylinders 38 erreicht sind. Die in Figur 6 dargestellte Ausführungsform, mit den beabstandeten Anschlüssen 62, 72 stellt jedoch eine einfachere und weniger teuere Lösung dar.

Durch den stufenweisen Druckaufbau, der durch den Hydraulikkreis 60 geschaffen wird, wird die eingebrachte Energie hydraulisch absorbiert bevor der Rückweichzylinder 38 seinen gesamten Hubweg absolviert hat. Nachdem das Hindernis von dem Gestängeabschnitt 16, 18 passiert wurde, fährt der Rückweichzylinder 38 aus, um den Gestängeabschnitt 16, 18 in eine normale Betriebsstellung zurückzubringen. Das Ventil 84 erfasst den reduzierten hydraulischen Systemdruck und ermöglicht der Pumpe über das Ventil 78 das System mit Druck zu beaufschlagen, bis sich wieder ein normaler Betriebsdruck im System eingestellt hat.

Auch wenn die Erfindung lediglich anhand zweier Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Gestängeanordnung, mit einem Tragrahmen (12), einem Gestängeabschnitt (16, 18), welcher zum Bewegen zwischen einer Betriebsstellung und einer Rückweichstellung schwenkbar mit dem Tragrahmen (12) verbunden ist, einem hydraulischen Rückweichzylinder (38), welcher einen ersten Zustand, in der er den Gestängeabschnitt (16, 18) in seiner Betriebsstellung hält, und einen Rückweichzustand aufweist, wenn der Gestängeabschnitt (16, 18) auf ein Hindernis trifft, einer mit dem Rückweichzylinder (38) verbundenen hydraulischen Ventilanordnung (64, 66, 74, 76, 78, 82, 84, 86, 88, 90, 92, 94) und einem mit dem Rückweichzylinder verbundenen Hydraulikspeicher (68), wobei die Ventilanordnung (64, 66, 74, 76, 78, 82, 84, 86, 88, 90, 92, 94) und der Hydraulikspeicher (68) eine abgestufte Drucksteuerung des Rückweichzylinders (38) bereitstellen, derart, dass Druck erzeugt wird, um Energie zu absorbieren, sobald sich der Gestängeabschnitt (16, 18) aus der Betriebsstellung herausbewegt, wobei der abgestufte Druck zunimmt, um die Bewegungsenergie des Gestängeabschnitts (16, 18) zu absorbieren, sobald der Gestängeabschnitt (16, 18) sich der Rückweichstellung annähert, **dadurch gekennzeichnet, dass** während wenigstens einer der Stufen die Ventilanordnung (64, 66, 74, 76, 78, 82, 84, 86, 88, 90, 92, 94) die Absorption der Energie des Gestängeabschnitts steuert und während einer anderen Stufe die Absorption der Energie des Gestängeabschnitts (16, 18) durch den Hydraulikspeicher (68) erfolgt.

2. Gestängeanordnung nach Anspruch 1, **dadurch gekennzeichnet, dass** der Gestängeabschnitt (16, 18) einen inneren Abschnitt eines landwirtschaftlichen Spritzengestänges umfasst.

3. Gestängeanordnung nach Anspruch 1 oder 2, **dadurch gekennzeichnet, dass** die Ventilanordnung (64, 66, 74, 76, 78, 82, 84, 86, 88, 90, 92, 94) und der Hydraulikspeicher (68) mit einem Ende des Rückweichzylinders (38) verbunden sind, wobei der Rückweichzylinder (38) einen ausgefahrenen Zustand einnimmt, wenn der Gestängeabschnitt (16, 18) in der Betriebsstellung ist, und einen zusammengefahrenen Zustand einnimmt, wenn der Gestängeabschnitt (16, 18) in der Rückweichstellung ist.

4. Gestängeanordnung nach einem der Ansprüche 1 bis 3, **dadurch gekennzeichnet, dass** der Hydraulikspeicher (68) und die Ventilanordnung (64, 66, 74, 76, 78, 82, 84, 86, 88, 90, 92, 94) eine erste Stufe definieren, in der der Hydraulikspeicher (68) Energie des Gestängeabschnitts (16, 18) absorbiert, wenn der Gestängeabschnitt (16, 18) auf das Hindernis trifft.

5. Gestängeanordnung nach einem der Ansprüche 1 bis 4, **dadurch gekennzeichnet, dass** der Hydraulikspeicher (68) und die Ventilanordnung (64, 66, 74, 76, 78, 82, 84, 86, 88, 90, 92, 94) eine volle Rückweichstufe definieren, in der der Hydraulikspeicher Energie des Gestängeabschnitts (16, 18) absorbiert, wenn der Gestängeabschnitt (16, 18) sich der Rückweichstellung annähert.

6. Gestängeanordnung nach einem der Ansprüche 1 bis 5, **dadurch gekennzeichnet, dass** der Hydraulikspeicher (68) und die Ventilanordnung (64, 66, 74, 76, 78, 82, 84, 86, 88, 90, 92, 94) eine Zwischenstufe definieren, in der die Ventilanordnung (64, 66, 74, 76, 78, 82, 84, 86, 88, 90, 92, 94) einen Fließwiderstand gegen hydraulische Flüssigkeit aus dem Rückweichzylinder (38) erzeugt, um Energie des Gestängeabschnitts (16, 18) zu absorbieren, wenn der Gestängeabschnitt (16, 18) sich zwischen der Betriebsstellung und der Rückweichstellung befindet.

7. Gestängeanordnung nach einem der Ansprüche 1 bis 6, **dadurch gekennzeichnet, dass** die Ventilanordnung (64, 66, 74, 76, 78, 82, 84, 86, 88, 90, 92, 94) in einer Zwischenstellung des Gestängeabschnitts (16, 18) die Absorption der Energie bewirkt, indem in der Zwischenstellung der hydraulische Fluss relativ zum Rückweichzylinder (38) begrenzt wird, und der Hydraulikspeicher (68) die Absorption der Energie bewirkt, wenn sich der Gestängeabschnitt (16, 18) der Rückweichstellung nähert.

8. Gestängeanordnung nach einem der Ansprüche 1 bis 7, **dadurch gekennzeichnet, dass** die Ventilanordnung (64, 66, 74, 76, 78, 82, 84, 86, 88, 90, 92, 94) in der Zwischenstellung des Gestängeabschnitts (16, 18) die Absorption der Energie bewirkt, indem in der Zwischenstellung der hydraulische Fluss relativ zum Rückweichzylinder (38) begrenzt wird, und der Hydraulikspeicher (68) Eine Anfangs-Absorption der Energie bewirkt, wenn der Gestängeabschnitt (16, 18) auf ein Hindernis trifft und beginnt, sich aus der Betriebsstellung heraus zu bewegen.

9. Gestängeanordnung nach einem der Ansprüche 1 bis 8, **dadurch gekennzeichnet, dass** die Ventilanordnung (64, 66, 74, 76, 78, 82, 84, 86, 88, 90, 92, 94) ein mit dem Rückweichzylinder (38) verbundenes und auf den Druck im Rückweichzylinder (38) ansprechendes Druckbegrenzungsventil (82) umfasst, wobei der Hydraulikspeicher (68) im Wesentlichen die gesamte Energie absorbiert, bis das Druckbegrenzungsventil (82) auf einen zunehmenden Druck im Rückweichzylinder (38) anspricht.

10. Gestängeanordnung nach einem der Ansprüche 1 bis 9, **dadurch gekennzeichnet, dass** ein zweiter Gestängeabschnitt (16, 18) enthalten ist, welcher schwenkbar mit dem Tragrahmen (12) und mit dem Rückweichzylinder (38) verbunden ist, wobei der Hydraulikspeicher (68) und die Ventilanordnung (64, 66, 74, 76, 78, 82, 84, 86, 88, 90, 92, 94) eine Absorption der Energie des zweiten Gestängeabschnitts (16, 18) bewirken, wenn der zweite Gestängeabschnitt (16, 18) auf ein Hindernis trifft.

11. Gestängeanordnung nach Anspruch 10, **dadurch gekennzeichnet, dass** eine Wipphebelanordnung (32, 34) vorgesehen ist, welche die Gestängeabschnitte (16, 18) mit dem Rückweichzylinder (38) verbindet.

12. Gestängeanordnung nach Anspruch 11, **dadurch gekennzeichnet, dass** eine Faltzylinderanordnung (26, 28) vorgesehen sind, welche mit der Wipphebelanordnung (32, 34) und den Gestängeabschnitten (16, 18) verbunden ist, um die Gestängeabschnitte (16, 18) aus der Betriebsstellung in eine gefaltete Transportstellung zu bewegen.

13. Gestängeanordnung nach einem der Ansprüche 10 bis 12, **dadurch gekennzeichnet, dass** Mittel (62, 72) vorgesehen sind, welche die Ventilanordnung (64, 66, 74, 76, 78, 82, 84, 86, 88, 90, 92, 94) und den Hydraulikspeicher (68) mit dem Rückweichzylinder (38) verbinden.

14. Gestängeanordnung nach einem der Ansprüche 10 bis 13, **dadurch gekennzeichnet, dass** die Mittel einen ersten Anschluss (62) am Rückweichzylinder (38), der mit dem Hydraulikspeicher (68) verbunden ist, und einen zweiten Anschluss (72) am Rückweichzylinder (38) aufweisen, der mit dem Druckbegrenzungsventil (82) verbunden ist, wobei die Anschlüsse über erste und zweite hydraulische Leitungen mit dem Rückweichzylinder (38) bzw. dem Druckbegrenzungsventil (82) verbunden sind.

15. Gestängeanordnung nach Anspruch 14, **dadurch gekennzeichnet, dass** der Rückweichzylinder (38) einen Hubweg aufweist und die Anschlüsse (62, 72) entlang des Hubwegs des Rückweichzylinders (38) versetzt angeordnet sind.

16. Gestängeanordnung nach Anspruch 15, **dadurch gekennzeichnet, dass** wenigstens einer der ersten und zweiten Anschlüsse (62, 72) während eines Abschnitts des Hubwegs blockierbar ist.

17. Gestängeanordnung nach einem der Ansprüche 15 oder 16, **dadurch gekennzeichnet, dass** der erste Anschluss (62) mit dem Hydraulikspeicher (68) und der zweite Anschluss (72) mit dem Druckbegrenzungsventil (82) verbunden ist, wobei der zweite Anschluss (72) ausgehend vom ersten Anschluss (62) in Richtung des Hubwegs versetzt angeordnet ist.

18. Gestängeanordnung nach einem der Ansprüche 15 bis 17, **dadurch gekennzeichnet, dass** der erste Anschluss (62) im Wesentlichen während des gesamten Hubwegs frei liegt und der zweite Anschluss (72) blockiert ist, wenn sich der Gestängeabschnitt (16, 18) der Rückweichstellung nähert.

19. Gestängeanordnung nach einem der Ansprüche 15 bis 18, **dadurch gekennzeichnet, dass** das Druckbegrenzungsventil (82) über einen Abschnitt des Hubwegs den Druck im Rückweichzylinder (38) steuert und der Hydraulikspeicher (68) einen ansteigenden Druck im Rückweichzylinder (38) nahe eines Extrempunktes des Hubwegs bereitstellt.

20. Gestängeanordnung nach Anspruch 19, **dadurch gekennzeichnet, dass** Mittel vorgesehen sind, durch welche die Ventilanordnung (64, 66, 74, 76, 78, 82, 84, 86, 88, 90, 92, 94) nahe des Extrempunktes des Hubwegs blockierbar sind.

21. Gestängeanordnung nach einem der Ansprüche 15 bis 20, **dadurch gekennzeichnet, dass** der Hydraulikspeicher (68) einen ansteigenden Druck im Rückweichzylinder (38) bei erreichen eines Anfangspunkts und bei Erreichen eines Endpunkts des Hubwegs bereitstellt und die Ventilanordnung (64, 66, 74, 76, 78, 82, 84, 86, 88, 90, 92, 94) während eines Zwischenbereichs des Hubwegs einen Druck im Rückweichzylinder (38) definiert.

22. Gestängeanordnung nach einem der Ansprüche 1 bis 21, **dadurch gekennzeichnet, dass** der Rückweichzylinder (38) den Gestängeabschnitt in die Betriebsstellung vorspannt.

## Claims

1. Linkage arrangement, comprising a supporting frame (12), a linkage portion (16, 18), which, for movement between an operating position and a retreat position, is pivotably connected to the supporting frame (12), a hydraulic retreating cylinder (38), which has a first state, in which it holds the linkage portion (16, 18) in its operating position, and a retreat state when the linkage portion (16, 18) encounters an obstacle, a hydraulic valve arrangement (64, 66, 74, 76, 78, 82, 84, 86, 88, 90, 92, 94) connected to the retreating cylinder (38), and a hydraulic accumulator (68) connected to the retreating cylinder, wherein the valve arrangement (64, 66, 74, 76, 78, 82, 84, 86, 88, 90, 92, 94) and the hydraulic accumulator (68) provide a stepped pressure control of the retreating cylinder (38) such that pressure is generated in order to absorb energy as soon as the linkage portion (16, 18) moves out of the operating position, the stepped pressure increasing, in order to absorb the kinetic energy of the linkage portion (16, 18), as soon as the linkage portion (16, 18) nears the retreat position, **characterized in that**, during at least one of the steps, the valve arrangement (64, 66, 74, 76, 78, 82, 84, 86, 88, 90, 92, 94) controls the absorption of the energy of the linkage portion and, during another step, the absorption of the energy of the linkage portion (16, 18) by the hydraulic accumulator (68) is realized.

2. Linkage arrangement according to Claim 1, **characterized in that** the linkage portion (16, 18) comprises an inner portion of an agricultural spray linkage.

3. Linkage arrangement according to Claim 1 or 2, **characterized in that** the valve arrangement (64, 66, 74, 76, 78, 82, 84, 86, 88, 90, 92, 94) and the hydraulic accumulator (68) are connected to one end of the retreating cylinder (38), the retreating cylinder (38) assuming an extended state when the linkage portion (16, 18) is in the operating position and a retracted state when the linkage portion (16, 18) is in the retreat position.

4. Linkage arrangement according to one of Claims 1 to 3, **characterized in that** the hydraulic accumulator (68) and the valve arrangement (64, 66, 74, 76, 78, 82, 84, 86, 88, 90, 92, 94) define a first step, in which the hydraulic accumulator (68) absorbs energy of the linkage portion (16, 18) when the linkage portion (16, 18) encounters the obstacle.

5. Linkage arrangement according to one of Claims 1 to 4, **characterized in that** the hydraulic accumulator (68) and the valve arrangement (64, 66, 74, 76, 78, 82, 84, 86, 88, 90, 92, 94) define a full retreat step, in which the hydraulic accumulator (68) absorbs energy of the linkage portion (16, 18) when the linkage portion (16, 18) nears the retreat position.

6. Linkage arrangement according to one of Claims 1 to 5, **characterized in that** the hydraulic accumulator (68) and the valve arrangement (64, 66, 74, 76, 78, 82, 84, 86, 88, 90, 92, 94) define an intermediate step, in which the valve arrangement (64, 66, 74, 76, 78, 82, 84, 86, 88, 90, 92, 94) produces a flow resistance to hydraulic fluid from the retreating cylinder (38) in order to absorb energy of the linkage portion (16, 18) when the linkage portion (16, 18) is located between the operating position and the retreat position.

7. Linkage arrangement according to one of Claims 1 to 6, **characterized in that** the valve arrangement (64, 66, 74, 76, 78, 82, 84, 86, 88, 90, 92, 94), in an intermediate position of the linkage portion (16, 18), effects the absorption of the energy by, in the intermediate position, limiting the hydraulic flow relative to the retreating cylinder (38), and the hydraulic accumulator (68) effects the absorption of the energy when the linkage portion (16, 18) nears the retreat position.

8. Linkage arrangement according to one of Claims 1 to 7, **characterized in that** the valve arrangement (64, 66, 74, 76, 78, 82, 84, 86, 88, 90, 92, 94), in the intermediate position of the linkage portion (16, 18), effects the absorption of the energy by, in the intermediate position, limiting the hydraulic flow relative to the retreating cylinder (38), and the hydraulic accumulator (68) effects an initial absorption of the energy when the linkage portion (16, 18) encounters an obstacle and begins to move out of the operating position.

9. Linkage arrangement according to one of Claims 1 to 8, **characterized in that** the valve arrangement (64, 66, 74, 76, 78, 82, 84, 86, 88, 90, 92, 94) comprises a pressure relief valve (82), which is connected to the retreating cylinder (38) and responds to the pressure in the retreating cylinder (38), the hydraulic accumulator (68) absorbing essentially the whole of the energy until the pressure relief valve (82) responds to an increasing pressure in the retreating cylinder (38).

10. Linkage arrangement according to one of Claims 1 to 9, **characterized in that** a second linkage portion (16, 18) is included, which is pivotably connected to the supporting frame (12) and to the retreating cylinder (38), the hydraulic accumulator (68) and the valve arrangement (64, 66, 74, 76, 78, 82, 84, 86, 88, 90, 92, 94) effecting an absorption of the energy of the second linkage portion (16, 18) when the second linkage portion (16, 18) encounters an obstacle.

11. Linkage arrangement according to Claim 10, **characterized in that** a rocking lever arrangement (32, 34) is provided, which connects the linkage portions (16, 18) to the retreating cylinder (38).

12. Linkage arrangement according to Claim 11, **characterized in that** a folding cylinder arrangement (26, 28) is provided, which is connected to the rocking lever arrangement (32, 34) and the linkage portions (16, 18) in order to move the linkage portions (16, 18) out of the operating position into a folded transport position.

13. Linkage arrangement according to one of Claims 10 to 12, **characterized in that** means (62, 72) are provided, which connect the valve arrangement (64, 66, 74, 76, 78, 82, 84, 86, 88, 90, 92, 94) and the hydraulic accumulator (68) to the retreating cylinder (38).

14. Linkage arrangement according to one of Claims 10 to 13, **characterized in that** the means have a first port (62) on the retreating cylinder (38), which is connected to the hydraulic accumulator (68), and a second port (72) on the retreating cylinder (38), which is connected to the pressure relief valve (82), the ports being connected to the retreating cylinder (38) and the pressure relief valve (82) respectively via first and second hydraulic lines.

15. Linkage arrangement according to Claim 14, **characterized in that** the retreating cylinder (38) has a stroke travel and the ports (62, 72) are disposed in offset arrangement along the stroke travel of the retreating cylinder (38).

16. Linkage arrangement according to Claim 15, **characterized in that** at least one of the first and second ports (62, 72) can be blocked during a portion of the stroke travel.

17. Linkage arrangement according to one of Claims 15 or 16, **characterized in that** the first port (62) is connected to the hydraulic accumulator (68) and the second port (72) is connected to the pressure relief valve (82), the second port (72) being arranged offset, starting from the first port (62), in the direction of the stroke travel.

18. Linkage arrangement according to one of Claims 15 to 17, **characterized in that** the first port (62) is open essentially throughout the stroke travel, and the second port (72) is blocked when the linkage portion (16, 18) nears the retreat position.

19. Linkage arrangement according to one of Claims 15 to 18, **characterized in that** the pressure relief valve (82), over a portion of the stroke travel, controls the pressure in the retreating cylinder (38) and the hydraulic accumulator (68) provides a rising pressure in the retreating cylinder (38) close to an extreme point of the stroke travel.

20. Linkage arrangement according to Claim 19, **characterized in that** means are provided by which the valve arrangement (64, 66, 74, 76, 78, 82, 84, 86, 88, 90, 92, 94) can be blocked close to the extreme point of the stroke travel.

21. Linkage arrangement according to one of Claims 15 to 20, **characterized in that** the hydraulic accumulator (68) provides a rising pressure in the retreating cylinder (38) when a starting point and an end point, respectively, of the stroke travel is reached, and the valve arrangement (64, 66, 74, 76, 78, 82, 84, 86, 88, 90, 92, 94), during an intermediate region of the stroke travel, defines a pressure in the retreating cylinder (38).

22. Linkage arrangement according to one of Claims 1 to 21, **characterized in that** the retreating cylinder (38) biases the linkage portion into the operating position.

## Revendications

1. Système de rampe, comportant un châssis de support (12), une partie de rampe (16, 18) qui, pour se déplacer entre une position de travail et une position de retrait, est assemblée de manière pivotante au châssis de support (12), un vérin de recul (38) hydraulique, qui comporte une première phase, dans laquelle il maintient la partie de rampe (16, 18) dans sa position de travail, et une phase de recul, lorsque la partie de rampe (16, 18) vient heurter contre un obstacle, un ensemble de vannes hydrauliques (64, 66, 74, 76, 78, 82, 84, 86, 88, 90, 92, 94) relié au vérin de recul (38), et un réservoir hydraulique (68) relié au vérin de recul (38), l'ensemble de vannes (64, 66, 74, 76, 78, 82, 84, 86, 88, 90, 92, 94) et le réservoir hydraulique (68) mettant à disposition une commande graduée de la pression du vérin de recul (38), de telle sorte que la pression est générée pour absorber l'énergie dès que la partie de rampe (16, 18) est déplacée hors de la position de travail, la pression graduée augmentant pour absorber l'énergie de mouvement de la partie de rampe (16, 18) dès que la partie de rampe (16, 18) s'approche de la position de retrait, **caractérisé en ce que** pendant au moins une des phases, l'ensemble de vannes (64, 66, 74, 76, 78, 82, 84, 86, 88, 90, 92, 94) commande l'absorption de l'énergie de la partie de rampe et pendant une autre phase, l'énergie de la partie de rampe (16, 18) est absorbée par le réservoir hydraulique (68).

2. Système de rampe selon la revendication 1, **caractérisé en ce que** la partie de rampe (16, 18) comporte une partie intérieure d'une rampe de pulvérisation agricole.

3. Système de rampe selon la revendication 1 ou 2, **caractérisé en ce que** l'ensemble de vannes (64, 66, 74, 76, 78, 82, 84, 86, 88, 90, 92, 94) et le réservoir hydraulique (68) sont reliés à une extrémité du vérin de recul (38), le vérin de recul (38) étant amené dans une position extraite lorsque la partie de rampe (16, 18) est dans la position de travail, et étant amené dans une position rentrée lorsque la partie de rampe (16, 18) est dans la position de retrait.

4. Système de rampe selon l'une quelconque des revendications 1 à 3, **caractérisé en ce que** le réservoir hydraulique (68) et l'ensemble de vannes (64, 66, 74, 76, 78, 82, 84, 86, 88, 90, 92, 94) définissent une première phase, dans laquelle le réservoir hydraulique (68) absorbe l'énergie de la partie de rampe (16, 18) lorsque la partie de rampe (16, 18) vient heurter contre un obstacle.

5. Système de rampe selon l'une quelconque des revendications 1 à 4, **caractérisé en ce que** le réservoir hydraulique (68) et l'ensemble de vannes (64, 66, 74, 76, 78, 82, 84, 86, 88, 90, 92, 94) définissent une phase de recul complet, dans laquelle le réservoir hydraulique (68) absorbe l'énergie de la partie de rampe (16, 18) lorsque la partie de rampe (16, 18) s'approche de la position de retrait.

6. Système de rampe selon l'une quelconque des revendications 1 à 5, **caractérisé en ce que** le réservoir hydraulique (68) et l'ensemble de vannes (64, 66, 74, 76, 78, 82, 84, 86, 88, 90, 92, 94) définissent une phase intermédiaire, dans laquelle l'ensemble de vannes (64, 66, 74, 76, 78, 82, 84, 86, 88, 90, 92, 94) génère une résistance empêchant la circulation du liquide hydraulique hors du vérin de recul (38), afin d'absorber l'énergie de la partie de rampe (16, 18) lorsque la partie de rampe (16, 18) se situe entre la position de travail et la position de retrait.

7. Système de rampe selon l'une quelconque des revendications 1 à 6, **caractérisé en ce que** l'ensemble de vannes (64, 66, 74, 76, 78, 82, 84, 86, 88, 90, 92, 94), dans une position intermédiaire de la partie de rampe (16, 18), induit l'absorption de l'énergie, du fait que, dans la position intermédiaire, le flux hydraulique par rapport au vérin de recul (38) est limité, et le réservoir hydraulique (68) induit l'absorption de l'énergie lorsque la partie de rampe (16, 18) s'approche de la position de retrait.

8. Système de rampe selon l'une quelconque des revendications 1 à 7, **caractérisé en ce que** l'ensemble de vannes (64, 66, 74, 76, 78, 82, 84, 86, 88, 90, 92, 94), dans la position intermédiaire de la partie de rampe (16, 18), induit l'absorption de l'énergie, du fait que, dans la position intermédiaire, le flux hydraulique par rapport au vérin de recul (38) est limité, et le réservoir hydraulique (68) induit une absorption initiale de l'énergie lorsque la partie de rampe (16, 18) vient heurter contre un obstacle et commence à se déplacer hors de la position de travail.

9. Système de rampe selon l'une quelconque des revendications 1 à 8, **caractérisé en ce que** l'ensemble de vannes (64, 66, 74, 76, 78, 82, 84, 86, 88, 90, 92, 94) comporte une soupape de limitation de pression (82), reliée au vérin de recul (38) et réagissant à la pression dans le vérin de recul (38), le réservoir hydraulique (68) absorbant sensiblement toute l'énergie jusqu'à ce que la soupape de limitation de pression (82) réagisse à une augmentation de la pression dans le vérin de recul (38).

10. Système de rampe selon l'une quelconque des revendications 1 à 9, **caractérisé en ce qu'**il comporte une deuxième partie de rampe (16, 18), qui est assemblée de manière pivotante au châssis de support (12) et au vérin de recul (38), le réservoir hydraulique (68) et l'ensemble de vannes (64, 66, 74, 76, 78, 82, 84, 86, 88, 90, 92, 94) induisant une absorption d'énergie de la deuxième partie de rampe (16, 18) lorsque la deuxième partie de rampe (16, 18) vient heurter contre un obstacle.

11. Système de rampe selon la revendication 10, **caractérisé en ce qu'**il est prévu un système de levier basculant (32, 34) par lequel les parties de rampe (16, 18) sont reliées au vérin de recul (38).

12. Système de rampe selon la revendication 11, **caractérisé en ce qu'**il est prévu un système de vérin de pliage (26, 28), qui est relié au système de levier basculant (32, 34) et aux parties de rampe (16, 18) en vue de déplacer les parties de rampe (16, 18) hors de la position de travail dans une position de transport repliée.

13. Système de rampe selon l'une quelconque des revendications 10 à 12, **caractérisé en ce qu'**il est prévu des moyens (62, 72), par lesquels l'ensemble de vannes (64, 66, 74, 76, 78, 82, 84, 86, 88, 90, 92, 94) et le réservoir hydraulique (68) sont reliés au vérin de recul (38).

14. Système de rampe selon l'une quelconque des revendications 10 à 13, **caractérisé en ce que** les moyens comportent un premier raccord (62) sur le vérin de recul (38), qui est relié au réservoir hydraulique (68), et un deuxième raccord (72) sur le vérin de recul (38), qui est relié à la soupape de limitation de pression (82), les raccords étant reliés par l'intermédiaire d'une première et d'une deuxième conduite hydraulique respectivement avec le vérin de recul (38) et la soupape de limitation de pression (82).

15. Système de rampe selon la revendication 14, **caractérisé en ce que** le vérin de recul (38) possède une trajectoire de déplacement et les raccords (62, 72) sont agencés en étant décalés le long de la trajectoire de déplacement du vérin de recul (38).

16. Système de rampe selon la revendication 15, **caractérisé en ce qu'**au moins le premier ou le deuxième raccord (62, 72) peut être bloqué pendant une partie du trajet de déplacement.

17. Système de rampe selon la revendication 15 ou 16, **caractérisé en ce que** le premier raccord (62) est relié au réservoir hydraulique (68) et le deuxième raccord (72) est relié à la soupape de limitation de pression (82), le deuxième raccord (72) étant agencé de manière décalée à partir du premier raccord (62) vers la trajectoire de déplacement.

18. Système de rampe selon l'une quelconque des revendications 15 à 17, **caractérisé en ce que** le premier raccord (62) est libre sensiblement pendant tout le trajet de déplacement et le deuxième raccord (72) est bloqué lorsque la partie de rampe (16, 18) s'approche de la position de retrait.

19. Système de rampe selon l'une quelconque des revendications 15 à 18, **caractérisé en ce que** la soupape de limitation de pression (82), pendant une partie du trajet de déplacement, commande la pression dans le vérin de recul (38), et le réservoir hydraulique (68) met à disposition une pression croissante dans le vérin de recul (38) à proximité du point d'extrémité du trajet de déplacement.

20. Système de rampe selon la revendication 19, **caractérisé en ce qu'**il est prévu des moyens, par lesquels l'ensemble de vannes (64, 66, 74, 76, 78, 82, 84, 86, 88, 90, 92, 94) peut être bloqué à proximité du point d'extrémité du trajet de déplacement.

21. Système de rampe selon l'une quelconque des revendications 15 à 20, **caractérisé en ce que** le réservoir hydraulique (68) fournit une pression croissante dans le vérin de recul (38) lorsqu'un point initial du trajet de déplacement et un point final du trajet de déplacement sont atteints, et l'ensemble de vannes (64, 66, 74, 76, 78, 82, 84, 86, 88, 90, 92, 94) définit une pression dans le vérin de recul (38) pendant une zone intermédiaire du trajet de déplacement.

22. Système de rampe selon l'une quelconque des revendications 1 à 21, **caractérisé en ce que** le vérin de recul (38) précontraint la partie de rampe dans la position de travail.
